(19) Europäisches Patentamt
European Patent Office
Office européen des brevets

(11) **EP 3 073 648 A1**

(12) **EUROPEAN PATENT APPLICATION**
published in accordance with Art. 153(4) EPC

(43) Date of publication:
**28.09.2016 Bulletin 2016/39**

(51) Int Cl.:
***H04B 7/08*** *(2006.01)*     ***H04B 7/06*** *(2006.01)*

(21) Application number: **14798588.1**

(86) International application number:
**PCT/CN2014/077907**

(22) Date of filing: **20.05.2014**

(87) International publication number:
**WO 2014/183687 (20.11.2014 Gazette 2014/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.11.2013   CN 201310578969**

(71) Applicant: **Zhongxing Microelectronics Technology Co., Ltd.**
**Shenzhen, Guangdong 518085 (CN)**

(72) Inventor: **WANG, Jingyu**
**Shenzhen**
**Guangdong 518085 (CN)**

(74) Representative: **Regimbeau**
**20, rue de Chazelles**
**75847 Paris Cedex 17 (FR)**

(54) **METHOD AND DEVICE FOR ELIMINATING INTERFERENCE, AND STORAGE MEDIUM**

(57)     The present disclosure discloses a method and device for eliminating interference, and a storage medium. The method includes: performing soft information reconstruction on received data information according to coding soft information of data information, to obtain reconstructed soft modulation information of the data information; performing soft information reconstruction on received control information according to the coding soft information or bit sequence information of decoding information, to obtain reconstructed soft modulation information of the control information; and performing pre-coding on the reconstructed soft modulation information of the data information and the reconstructed soft modulation information of the control information, and performing interference elimination by using pre-coded reconstructed information.

Figure 2-1

## Description

<u>Technical Field</u>

The present disclosure relates to radio communication technologies, and particularly to a method and device for eliminating interference and a storage medium in a 3rd generation partnership project (3GPP) long term evolution (LTE) system.

<u>Background</u>

In a 3GPP LTE system, to increase an uplink throughput of a system, a transmission technology of uplink multiple input multiple output (MIMO) is proposed. That is, two users occupy a same frequency domain resource for transmission, and are distinguished only through different orthogonal sequences; and large multi-user interference exists during processing by a receiver. Because a traditional minimum mean square error (MMSE) equalization method may obviously lose performance at this moment, an interference elimination algorithm is adopted in industry to solve such a problem. The interference elimination algorithm may be classified into a serial interference elimination algorithm and a parallel interference elimination algorithm. The interference elimination algorithm has a principle of performing soft information reconstruction on transmission information through coding soft information output by a decoder so as to offset interference between same-frequency users input into an MMSE equalizer using iteration of reconstructed information, thereby obviously improving performance of the receiver and greatly increasing throughput of the system.

It can be seen from the above description that the most important thing in the interference elimination algorithm is to perform soft information reconstruction on the transmission information by using coding soft information obtained by decoding, and there would be a better effect on interference elimination only when information reconstruction is accurately completed. In an existing technology, only a Turbo decoder is used for completing reconstruction of data information in the transmission information without considering reconstruction of control information multiplexed on a physical uplink shared channel (PUSCH), causing that reconstructed data information is insufficient to eliminate interference in an interference elimination process by UE_B when UE_A has much control information multiplexed on the PUSCH in multi-user MIMO paired user equipment (UE) (assuming that paired UEs include UE_A and UE_B), especially when long channel quality indicator (CQI)/pre-coding matrix indicator (PMI) information with a large code length adopting convolutional coding exists, thereby resulting in problems of limited performance gain and impossibility of increasing throughput of the system. In addition, pairing in an MIMO mode is scheduled through a high-level control in the existing technology to avoid such problems, thereby bringing an influence on scheduling flexibility, complexity and time delay of the system.

<u>Summary</u>

In view of this, with respect to problems in an existing art, embodiments of the present disclosure provide a method and device for eliminating interference and a storage medium all capable of effectively enhancing reception performance of multi-user MIMO under a multiplex control information scenario and also capable of reducing scheduling complexity and scheduling flexibility of a protocol stack under a multi-user MIMO scenario.

Technical solutions in embodiments of the present disclosure are realized as follows.

Embodiments of the present disclosure provide a method for eliminating interference, including:

performing soft information reconstruction on received data information according to coding soft information of data information, to obtain reconstructed soft modulation information of the data information;

performing soft information reconstruction on received control information according to the coding soft information or bit sequence information of decoding information, to obtain reconstructed soft modulation information of the control information; and

performing pre-coding on the reconstructed soft modulation information of the data information and the reconstructed soft modulation information of the control information, and performing interference elimination by using pre-coded reconstructed information.

Preferably, the control information includes HARQ-ACK information and channel RI information both adopting repeated mapping coding;

correspondingly, performing soft information reconstruction on received control information according to the coding soft information or bit sequence information of decoding information to obtain reconstructed soft modulation information of the control information, includes:

respectively acquiring bit sequence information of decoding information of decoded HARQ-ACK information and RI information; and performing repeated mapping coding, interweaving and modulation on the bit sequence information of the decoding information in a process as same as that in a transmitting end, to obtain reconstructed soft modulation information of the HARQ-ACK information and the RI information.

Preferably, the control information includes short CQI/PMI information adopting block coding;

correspondingly, performing soft information reconstruction on received control information according to the coding soft information or bit sequence information of decoding information to obtain reconstructed soft modulation information of the control information, includes:

respectively acquiring bit sequence information of decoding information of decoded CQI/PMI information; and performing repeated mapping coding, interweaving and modulation on the bit sequence information of the decoding information in a process as same as that in a transmitting end, to obtain reconstructed soft modulation information of the PMI/PMI information.

Preferably, the control information includes long CQI/PMI information adopting convolutional coding;

correspondingly, performing soft information reconstruction on received control information according to the coding soft information or bit sequence information of decoding information to obtain reconstructed soft modulation information of the control information, includes:

acquiring soft decision information obtained after demodulation; inputting the soft decision information into an MAP convolutional decoder, to obtain coding soft information with a code rate of 1/3 after decoding processing; and performing soft information modulation on the coding soft information with a code rate of 1/3 to obtain reconstructed soft modulation information of the long CQI/PMI information.

Preferably, the MAP convolutional decoder includes a convolutional decoder based on MAP or Log-MAP or MaxLogMAP iteration algorithm.
Preferably, an initial value of forward accumulated measurement and backward accumulated measurement in the MAP or LogMAP or MaxLogMAP iteration algorithm is set as -16 to -128.
Embodiments of the present disclosure further provide a device for eliminating interference, including a first reconstruction unit, a second reconstruction unit and a processing unit, where:

the first reconstruction unit is configured to perform soft information reconstruction on received data information according to coding soft information of data information, to obtain reconstructed soft modulation information of the data information;
the second reconstruction unit is configured to perform soft information reconstruction on received control information according to the coding soft information or bit sequence information of decoding information, to obtain reconstructed soft modulation information of the control information; and
the processing unit is configured to perform pre-coding on the reconstructed soft modulation information of the data information and the reconstructed soft modulation information of the control information, and perform an interference elimination process by using pre-coded reconstructed information.

Preferably, the control information includes HARQ-ACK information and channel RI information both adopting repeated mapping coding;
correspondingly, the second reconstruction unit is configured for respectively acquiring bit sequence information of decoding information of decoded HARQ-ACK information and RI information; and performing repeated mapping coding, interweaving and modulation on the bit sequence information of the decoding information in a process as same as that in a transmitting end, to obtain reconstructed soft modulation information of the HARQ-ACK information and the RI information.
Preferably, the control information includes short CQI/PMI information adopting block coding;
correspondingly, the second reconstruction unit is configured for respectively acquiring bit sequence information of decoding information of decoded CQI/PMI information; and performing repeated mapping coding, interweaving and modulation on the bit sequence information of the decoding information in a process as same as that in a transmitting end, to obtain reconstructed soft modulation information of the PMI/PMI information.
Preferably, the control information includes long CQI/PMI information adopting convolutional coding;
correspondingly, the second reconstruction unit is configured for acquiring soft decision information obtained after demodulation; inputting the soft decision information into an MAP convolutional decoder to obtain coding soft information with a code rate of 1/3 after decoding processing; and performing soft information modulation on the coding soft information with a code rate of 1/3, to obtain reconstructed soft modulation information of the long CQI/PMI information.
Embodiments of the present disclosure further provide a computer readable storage medium, in which a computer executable instruction is stored and is used for executing the above-mentioned method for eliminating interference.
In embodiments of the present disclosure, a method includes performing soft information reconstruction on received data information according to coding soft information of data information, to obtain reconstructed soft modulation information of the data information; performing soft information reconstruction on received control information according to the coding soft information or bit sequence information of decoding information, to obtain reconstructed soft modulation information of the control information; and performing multiplexing and interweaving on the reconstructed soft modulation information of the data information and the reconstructed soft modulation information of the control information, and outputting the reconstructed information after finishing pre-coding for interference elimination. As such, the present disclosure is capable of effectively enhancing reception performance of multi-user MIMO under a multiplex control information scenario and also capable of reducing scheduling complexity and scheduling flexibility of a protocol stack under a multi-user MIMO scenario.

Description of the Drawings

Figure 1 is a schematic diagram showing uplink control information and an uplink data multiplexing mode in an LTE system;
Figure 2-1 is a schematic diagram showing a realization flow of a method for eliminating interference in embodiments of the present disclosure;
Figure 2-2 is a schematic diagram 1 showing a realization flow of step 202 in Figure 2-1 in embodiments of the present disclosure;

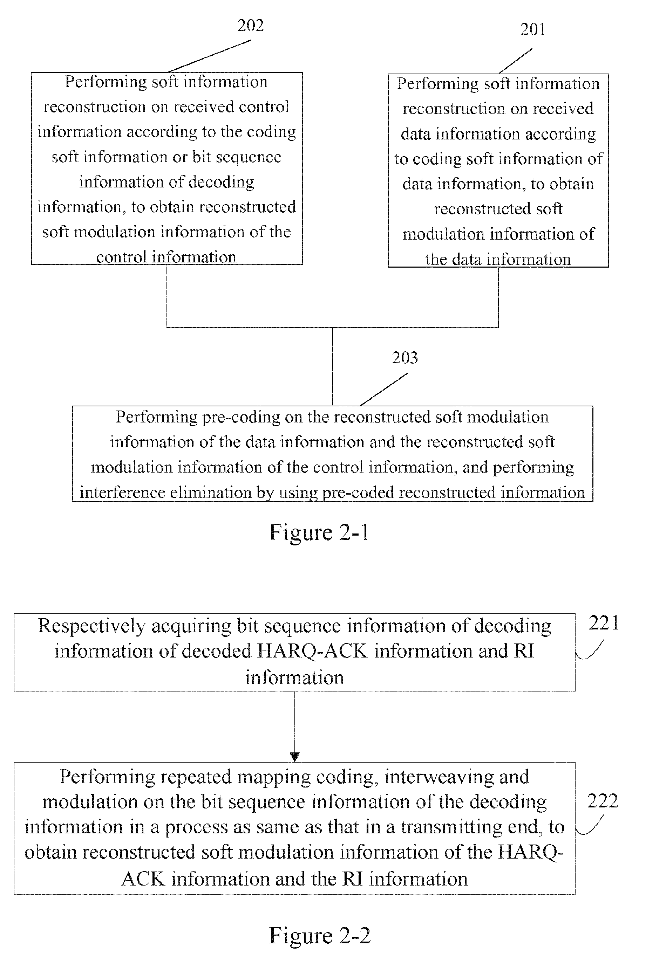

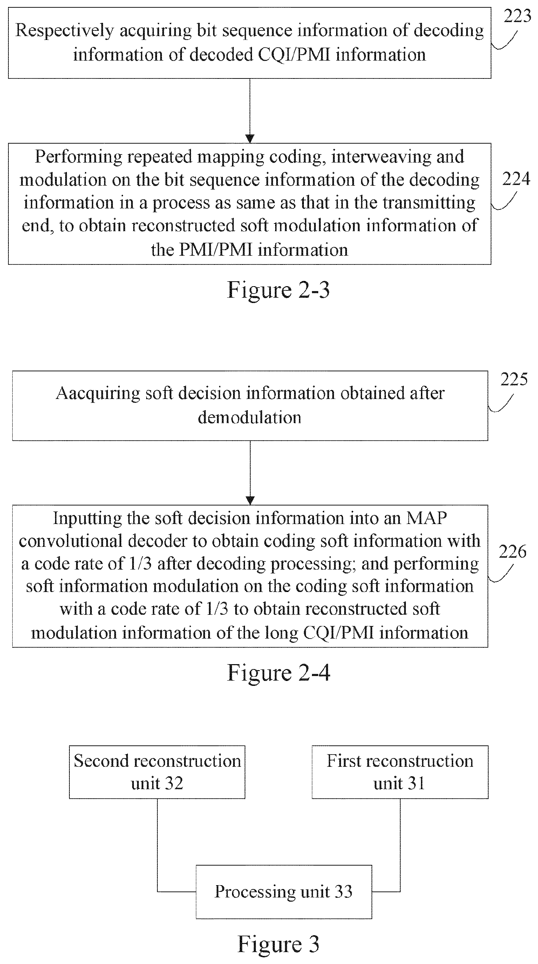

Figure 2-3 is a schematic diagram 2 showing a realization flow of step 202 in Figure 2-1 in embodiments of the present disclosure;
Figure 2-4 is a schematic diagram 3 showing a realization flow of step 202 in Figure 2-1 in embodiments of the present disclosure; and
Figure 3 is a schematic diagram showing a composition structure of a device for eliminating interference in embodiments of the present disclosure.

Detailed Description

In an LTE system, uplink control information to be transmitted by an uplink has hybrid automatic repeat request acknowledgement (HARQ-ACK) information and three forms reflecting downlink physical channel state information (CSI): CQI information, PMI information and rank indicator (RI) information.

The HARQ-ACK information is transmitted on a physical uplink control channel (PUCCH). If user equipment (UE) needs to transmit uplink data, the HARQ-ACK information is transmitted on the PUSCH. Feedback of CQI/PMI and RI may be periodic feedback or non-periodic feedback. For CQI/PMI and RI which are fed back periodically, if UE does not need to transmit uplink data, CQI/PMI and RI, which are fed back periodically, are transmitted on the PUCCH; and if UE needs to transmit uplink data, CQI/PMI and RI are transmitted on the PUSCH. For CQI/PMI and RI which are fed back non-periodically, CQI/PMI and RI, which are fed back non-periodically, are only transmitted on the PUSCH.

The HARQ-ACK information and the RI information are formed by adopting repeated mapping coding. The CQI/PMI information may be classified into short CQI/PMI information with relatively short code length and long CQI/PMI information with relatively long code length. The short CQI/PMI information is formed by adopting block coding, and the long CQI/PMI information is formed by adopting convolutional coding. Information reconstruction objects in embodiments of the present disclosure are above three kinds of control information. Reconstruction is performed on the three kinds of control information so as to realize a corresponding interference elimination process.

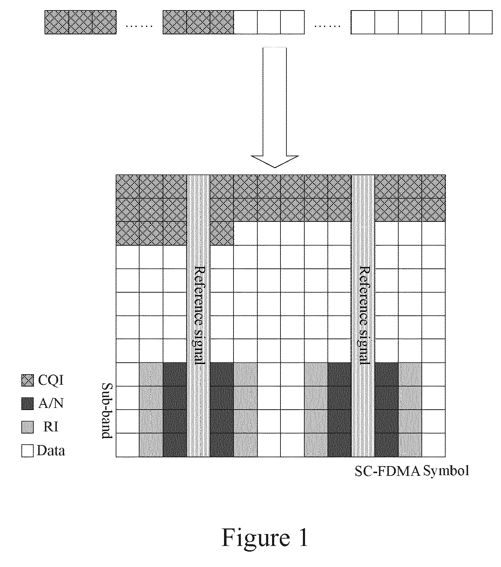

Figure 1 is a schematic diagram showing uplink control information and an uplink data multiplexing mode in an LTE system. As shown in Figure 1, uplink data are transmitted in a form of a transport block (TB). After the TB is subject to CRC attachment, code block segmentation, code block CRC attachment, channel coding, rate matching and code block concatenation, multiplexing of uplink data and the control information is performed on the uplink data and coded CQI/PMI, and finally, coded ACK/NACK information, RI information and data are multiplexed together through channel interweaving.

Figure 2-1 is a schematic diagram showing a realization flow of a method for eliminating interference in embodiments of the present disclosure. As shown in Figure 2-1, the method includes:

step 201, performing soft information reconstruction on received data information according to coding soft information of data information, to obtain reconstructed soft modulation information of the data information;
Here, the decoder is preferably a Turbo decoder, and the step 201 may adopt a realization process as same as that in an existing art, which will not be repeated here in detail.
Step 202, performing soft information reconstruction on received control information according to the coding soft information or bit sequence information of decoding information, to obtain reconstructed soft modulation information of the control information.
Here, the control information includes HARQ-ACK information and RI information both adopting repeated mapping coding, and short CQI/PMI information adopting block coding, or long CQI/PMI information adopting convolutional coding.
Here, the bit sequence information of the decoding information is binary bit sequence information output by the decoder.
Step 203, performing pre-coding on the reconstructed soft modulation information of the data information and the reconstructed soft modulation information of the control information, and performing interference elimination by using pre-coded reconstructed information.

Here, performing pre-coding on the reconstructed soft modulation information of the data information and the reconstructed soft modulation information of the control information, and performing interference elimination by using pre-coded reconstructed information, specifically includes: performing multiplexing, interweaving and pre-coding successively on the reconstructed soft modulation information of the data information and the reconstructed soft modulation information of the control information, and outputting pre-coded reconstructed information to an interference elimination module for performing an interference elimination process. Here, the pre-coding in the LTE means a process for performing discrete Fourier transform on the reconstructed soft modulation information. Those skilled in the art should understand that it is easy to realize interference elimination by using the reconstructed soft modulation information. For example, division processing may be performed on the information, which is to be subjected to interference processing, and the reconstructed soft modulation information for realizing interference elimination.

In an embodiment shown in Figure 2-1, there is no particular order between step 201 and step 202 in a process of the embodiment. The control information includes HARQ-ACK information and RI information both adopting repeated mapping coding. Correspondingly, as shown in Figure 2-2, the step 202 includes:

step 221, respectively acquiring bit sequence information of decoding information of decoded HARQ-ACK information and RI information; and
Step 222, performing repeated mapping coding, interweaving and modulation on the bit sequence information of the decoding information in a process as same as that in a transmitting end, to obtain reconstructed soft modulation information of the HARQ-ACK information and the RI information.

Here, the bit sequence information of the decoding information is binary bit sequence information output by the decoder.

Here, there are high repeating gain and high reliability since the HARQ-ACK information and the RI information are repeated many times on the transmitting end, so that repeated mapping coding, interweaving and modulation on the bit sequence information of the decoding information obtained by the decoder may be directly performed in a process as same as that in the transmitting end, so as to obtain reconstructed soft modulation information. A process of performing repeated mapping coding, interweaving and modulation on the HARQ-ACK information and the RI information at the transmitting end may be referred to relevant specifications on standard protocols. Therefore, relevant specifications on standard protocols may also be referred to on a receiving end, which will not be repeated here in detail.

In embodiments shown in Figure 2-1, the control information further includes short CQI/PMI information adopting block coding. Correspondingly, as shown in Figure 2-3, the step 202 includes:

step 223, respectively acquiring bit sequence information of decoding information of decoded CQI/PMI information; and
Step 224, performing repeated mapping coding, interweaving and modulation on the bit sequence information of the decoding information in a process as same as that in the transmitting end, to obtain reconstructed soft modulation information of the PMI/PMI information.

Here, there are also high repeating gain and reliability since the short CQI/PMI information adopting block coding has low peak-to-average ratio on the transmitting end and is repeated many times under most of scenarios; and a method similar to the HARQ-ACK information and the RI information may be directly adopted to reconstruct the soft modulation information of the short CQI/PMI information since coding soft information adopting block encoding is unavailable in a decoding process.

Here, a process of performing repeated mapping coding, interweaving and modulation on the CQI/PMI information at the transmitting end may be referred to relevant specifications on standard protocols. Therefore, relevant specifications on standard protocols can also be referred to on a receiving end, which will not be repeated here in detail.

In embodiments shown in Figure 2-1, the control information further includes long CQI/PMI information adopting convolutional coding. Correspondingly, as shown in Figure 2-4, the step 202 includes:

step 225, acquiring soft decision information obtained after demodulation; and
step 226, inputting the soft decision information into an MAP convolutional decoder to obtain coding soft information with a code rate of 1/3 after decoding processing; and performing soft information modulation on the coding soft information with a code rate of 1/3 to obtain reconstructed soft modulation information of the long CQI/PMI information.

Here, the long CQI/PMI information adopting convolutional coding generally has a large resource demand. However, rate matching shall be performed on convolutional coding information with a rate of 1/3 in consideration of performance of data information. Therefore, the long CQI/PMI information itself has small repeating gain. Meanwhile, a relatively simple Viterbi decoding algorithm is adopted in relevant decoding processing on the receiving end in the existing art. Because the Viterbi decoding algorithm cannot realize output of the coding soft information, a convolutional decoder based on maximum a posteriori probability (MAP) iteration algorithm may be adopted in a process of reconstructing the long CQI/PMI information. The MAP iteration algorithm includes an MAP or logarithmic MAP (LogMAP) or maximum LogMAP (MaxLogMAP) iteration algorithm. The soft decision information obtained by a receiver after demodulation is input into the convolutional decoder based on the MAP iteration algorithm, accurate output of the coding soft information with a code rate of 1/3 is obtained through decoding processing, and soft information modulation is performed on the coding soft information to obtain reconstructed soft modulation information.

Here, with respect to problems in an LTE system that a source code of the CQI/PMI information adopting convolutional coding has short length and a decoding convergence rate is low and a time delay burden of the system is high due to setting of a negative infinite initial value of forward accumulated measurement and backward accumulated measurement in the MAP iteration algorithm, embodiments of the present disclosure also improves the initial value. Specifically, an initial value of forward accumulated measurement and backward accumulated measurement in the MAP or LogMAP or Max-LogMAP iteration algorithm is set as -16 to -128. When the initial value is a power of 2, i.e., -16, -32, -64 or -128, a number of iterations of the MAP or LogMAP or Max-LogMAP iteration algorithm is greatly reduced; and a simulation test result shows that: in a same number of iterations, the convolutional decoder improved by embodiments of the present disclosure has same or even better performance compared with a Viterbi decoder.

Embodiment 1

In embodiment 1 of the present disclosure, technical solutions of the embodiment of the present disclosure are described in detail by taking multiplexing the HARQ-ACK information, the RI information and the long CQI/PMI information adopting convolutional coding in the PUSCH of multi-user MIMO paired UE and adopting a modulation manner of 64QAM as an example. The technical solutions are specifically as follows.

Step D1, performing soft information reconstruction on received data information according to coding soft information output by a decoder, to obtain reconstructed soft modulation information of the data information.

Step D2, performing soft information reconstruction on the HARQ-ACK information and the RI information according to bit sequence information of decoding information output by the decoder, to obtain reconstructed soft modulation information of the control information.

Specially, assuming that the HARQ-ACK information obtained by the decoder is 1, then a number of repetition is 5; a reconstruction bit sequence obtained by the decoder after mapping and coding is 110000,110000, 110000,110000,110000; and a sequence of soft modulation information after passing through a soft modulation module in a receiver is

$$\left[ -\frac{3}{\sqrt{42}} - \frac{3}{\sqrt{42}} i, \qquad -\frac{3}{\sqrt{42}} - \frac{3}{\sqrt{42}} i, \right.$$

$$\left. -\frac{3}{\sqrt{42}} - \frac{3}{\sqrt{42}} i, \qquad -\frac{3}{\sqrt{42}} - \frac{3}{\sqrt{42}} i, \right.$$

$$\left. -\frac{3}{\sqrt{42}} - \frac{3}{\sqrt{42}} i \right].$$

Here, a reconstruction process of the RI information is similar to that of the HARQ-ACK information, which will not be repeated here in detail.

Step D3, performing soft information reconstruction on the long CQI/PMI information adopting convolutional coding according to coding soft information output by the decoder, to obtain reconstructed soft modulation information of the control information.

Specifically, the soft decision information obtained by a receiver after demodulation is input into the convolutional decoder based on the MaxLogMap iteration algorithm. Here, assuming that a system information sequence of an input soft decision information sequence is: Sys(i); check 1 information is: P_1(i); and check 2 information is: P_2(i), where i=0, 1, ..., K+4, and the K is a length of a coding block.

a coding soft information sequence obtained after several iterations of the MAP convolutional decoder is: system soft information: Sys_LLR(i); check 1 soft information: P_1_LLR (i); and check 2 soft information: P_2_LLR (i), where i=0, 1, ..., K+4, and K is a length of a coding block. A sequence of the soft modulation information after passing through the soft modulation module is: SoftMod_Seq.

Step D4, performing multiplexing, interweaving and pre-coding successively on the reconstructed soft modulation information of the data information and the reconstructed soft modulation information of the control information, and outputting pre-coded reconstructed information to an interference elimination module for performing an interference elimination process.

Embodiments of the present disclosure further provide a device for eliminating interference. Figure 3 is a schematic diagram showing a composition structure of a device for eliminating interference in embodiments of the present disclosure. As shown in Figure 3, the device for eliminating interference includes a first reconstruction unit 31, a second reconstruction unit 32 and a processing unit 33.

The first reconstruction unit 31 is configured to perform soft information reconstruction on received data information according to coding soft information of data information, to obtain reconstructed soft modulation information of the data information;

the second reconstruction unit 32 is configured to perform soft information reconstruction on received control information according to the coding soft information or bit sequence information of decoding information, to obtain reconstructed soft modulation information of the control information; and

the processing unit 33 is configured to perform pre-coding on the reconstructed soft modulation information of the data information and the reconstructed soft modulation information of the control information, and perform interference elimination by using pre-coded reconstructed information.

In embodiments shown in Figure 3, the control information includes HARQ-ACK information and RI information both adopting repeated mapping coding.

Correspondingly, the second reconstruction unit is configured for respectively acquiring bit sequence information of decoding information of decoded HARQ-ACK information and RI information; and performing repeated mapping coding, interweaving and modulation on the bit sequence information of the decoding information in a process as same as that in a transmitting end, to obtain reconstructed soft modulation information of the HARQ-ACK information and the RI information.

In embodiments shown in Figure 3, the control information includes short CQI/PMI information adopting block coding.

Correspondingly, the second reconstruction unit is configured for respectively acquiring bit sequence information of decoding information of decoded CQI/PMI information; and performing repeated mapping coding, interweaving and modulation on the bit sequence information of the decoding information in a process as same as that in a transmitting end, to obtain reconstructed soft modulation information of the PMI/PMI information.

In embodiments shown in Figure 3, the control information includes long CQI/PMI information adopting convolutional coding.

Correspondingly, the second reconstruction unit is configured for acquiring soft decision information obtained after demodulation; inputting the soft decision information into an MAP convolutional decoder to obtain coding soft information with a code rate of 1/3 after decoding processing; and performing soft information modulation on the coding soft information with a code rate of 1/3 to obtain reconstructed soft modulation information of the long CQI/PMI information.

Here, the long CQI/PMI information adopting convolutional coding generally has a large resource demand. However, rate matching shall be performed on convolutional coding information with a rate of 1/3 in consideration of performance of data information. Therefore, the long CQI/PMI information itself has small repeating gain. Meanwhile, a relatively simple Viterbi decoding algorithm is adopted in relevant decoding processing on the receiving end in the existing art. Because the Viterbi decoding algorithm cannot realize output of the coding soft information, a convolutional decoder based on the MAP iteration algorithm may be adopted in a process of reconstructing the long CQI/PMI information. The MAP iteration algorithm includes an MAP or LogMAP or Max-LogMAP iteration algorithm. The soft decision information obtained by a receiver after demodulation is input into the convolutional decoder based on the MAP iteration algorithm, accurate output of the coding soft information with a code rate of 1/3 is obtained through decoding processing, and soft information modulation is performed on the coding soft information to obtain reconstructed soft modulation information.

Here, with respect to problems in an LTE system that a source code of the CQI/PMI information adopting convolutional coding has short length and a decoding convergence rate is low and a time delay burden of the system is high due to setting of a negative infinite initial value of forward accumulated measurement and backward accumulated measurement in the MAP iteration algorithm, embodiments of the present disclosure also improves the initial value. Specifically, an initial value of forward accumulated measurement and backward accumulated measurement in the MAP or LogMAP or Max-LogMAP iteration algorithm is set as -16 to -128. When the initial value is a power of 2, i.e., -16, -32, -64 or -128, a number of iterations of the MAP or LogMAP or Max-LogMAP iteration algorithm is greatly reduced; and a simulation test result shows that: in a same number of iterations, the convolutional decoder improved by embodiments of the present disclosure has better performance than a Viterbi decoder.

The first reconstruction unit, the second reconstruction unit and the processing unit in the device for eliminating interference proposed in embodiments of the present disclosure may be realized through a processor of a receiver in a base station, and may also be realized through a specific logic circuit, e.g., may be realized through a central processing unit (CPU), a micro processor unit (MPU), a digital signal processor (DSP) or a field programmable gate array (FPGA) in practical application.

In embodiments of the present disclosure, if the above method for eliminating interference is realized in a form of a software function module and is sold or used as an independent product, the above method can also be stored in a computer readable storage medium. Based on such understanding, technical solutions in embodiments of the present disclosure can be reflected in a form of a software product in essence or in a part of making a contribution to the existing art. The computer software product is stored in a storage medium, including several instructions to enable one computer device (may be a personal computer, a server or a network device, etc.) to execute all or some of the methods of various embodiments of the present disclosure. However, the foregoing storage medium includes: various media such as a USB flash disk, a mobile hard disk, a read only memory (ROM), a magnetic disc or a compact disc, etc. which can store program coeds. In this way, embodiments of the present disclosure are not limited to any specific hardware and software combination.

Accordingly, embodiments of the present disclosure further provide a computer readable storage medium, in which a computer executable instruction is stored and is used for executing the method for eliminating interference provided in various embodiments of the present disclosure.

The above only describes preferred embodiments of the present disclosure, but is not intended to limit the scope of patent protection of the present disclosure. Any equivalent structure or equivalent flow transformation made by using contents of the description and drawings of the present disclosure, or directly or indirectly used in other relevant technical fields shall be similarly contained within the scope of patent protection of the present disclosure.

Industrial Applicability

In embodiments of the present disclosure, a method includes performing soft information reconstruction on received data information according to coding soft information of data information, to obtain reconstructed soft modulation information of the data information; performing soft information reconstruction on received control information according to the coding soft information or bit sequence information of decoding information, to obtain reconstructed soft modulation information of the control information; and performing multiplexing and interweaving on the reconstructed soft modulation information of the data information and the reconstructed soft modulation information of the control information, and outputting the reconstructed information after finishing pre-coding for interference elimination. As such, the present disclosure is capable of effectively enhancing reception performance of multi-user MIMO under a multiplex control information scenario and also capable of reducing scheduling complexity and scheduling flexibility of a protocol stack under a multi-user MIMO scenario.

**Claims**

1.  A method for eliminating interference, comprising:

    performing soft information reconstruction on received data information according to coding soft information of data information, to obtain reconstructed soft modulation information of the data information;
    performing soft information reconstruction on received control information according to the coding soft information or bit sequence information of decoding information, to obtain reconstructed soft modulation information of the control information; and
    performing pre-coding on the reconstructed soft modulation information of the data information and the reconstructed soft modulation information of the control information, and performing interference elimination by using pre-coded reconstructed information.

2.  The method according to claim 1, wherein the control information comprises hybrid automatic repeat request acknowledgement HARQ-ACK information and channel rank indicator RI information both adopting repeated mapping coding;
correspondingly, performing soft information reconstruction on received control information according to the coding soft information or bit sequence information of decoding information to obtain reconstructed soft modulation information of the control information, comprises:

    respectively acquiring bit sequence information of decoding information of decoded HARQ-ACK information and RI information; and
    performing repeated mapping coding, interweaving and modulation on the bit sequence information of the decoding information in a process as same as that in a transmitting end, to obtain reconstructed soft modulation information of the HARQ-ACK information and the RI information.

3.  The method according to claim 1 or 2, wherein the control information comprises short channel quality indicator CQI/pre-coding matrix indicator PMI information adopting block coding;
correspondingly, performing soft information reconstruction on received control information according to the coding soft information or bit sequence information of decoding information to obtain reconstructed soft modulation information of the control information, comprises:

    respectively acquiring bit sequence information of decoding information of decoded CQI/PMI information; and
    performing repeated mapping coding, interweaving and modulation on the bit sequence information of the decoding information in a process as same as that in a transmitting end, to obtain reconstructed soft modulation information of the PMI/PMI information.

4.  The method according to claim 1 or 2, wherein the control information comprises long CQI/PMI information adopting convolutional coding;
correspondingly, performing soft information reconstruction on received control information according to the coding soft information or bit sequence information of decoding information to obtain reconstructed soft modulation information of the control information, comprises:

    acquiring soft decision information obtained after demodulation;
    inputting the soft decision information into an maximum a posteriori probability MAP convolutional decoder, to obtain coding soft information with a code rate of 1/3 after decoding processing; and

performing soft information modulation on the coding soft information with a code rate of 1/3 to obtain reconstructed soft modulation information of the long CQI/PMI information.

5. The method according to claim 4, wherein the MAP convolutional decoder comprises a convolutional decoder based on MAP or logarithmic MAP LogMAP or maximum LogMAP MaxLogMAP iteration algorithm.

6. The method according to claim 5, wherein an initial value of forward accumulated measurement and backward accumulated measurement in the MAP or LogMAP or MaxLogMAP iteration algorithm is set as -16 to -128.

7. A device for eliminating interference, comprising a first reconstruction unit, a second reconstruction unit and a processing unit, wherein:

the first reconstruction unit is configured to perform soft information reconstruction on received data information according to coding soft information of data information, to obtain reconstructed soft modulation information of the data information;
the second reconstruction unit is configured to perform soft information reconstruction on received control information according to the coding soft information or bit sequence information of decoding information, to obtain reconstructed soft modulation information of the control information; and
the processing unit is configured to perform precoding on the reconstructed soft modulation information of the data information and the reconstructed soft modulation information of the control information, and perform an interference elimination process by using pre-coded reconstructed information.

8. The device according to claim 7, wherein the control information comprises HARQ-ACK information and channel RI information both adopting repeated mapping coding;
correspondingly, the second reconstruction unit is configured for respectively acquiring bit sequence information of decoding information of decoded HARQ-ACK information and RI information; and performing repeated mapping coding, interweaving and modulation on the bit sequence information of the decoding information in a process as same as that in a transmitting end, to obtain reconstructed soft modulation information of the HARQ-ACK information and the RI information.

9. The device according to claim 7 or 8, wherein the control information comprises short CQI/PMI information adopting block coding;
correspondingly, the second reconstruction unit is configured for respectively acquiring bit sequence information of decoding information of decoded CQI/PMI information; and performing repeated mapping coding, interweaving and modulation on the bit sequence information of the decoding information in a process as same as that in a transmitting end, to obtain reconstructed soft modulation information of the PMI/PMI information.

10. The device according to claim 7 or 8, wherein the control information comprises long CQI/PMI information adopting convolutional coding;
correspondingly, the second reconstruction unit is configured for acquiring soft decision information obtained after demodulation; inputting the soft decision information into an MAP convolutional decoder to obtain coding soft information with a code rate of 1/3 after decoding processing; and performing soft information modulation on the coding soft information with a code rate of 1/3, to obtain reconstructed soft modulation information of the long CQI/PMI information.

11. A computer readable storage medium, in which a computer executable instruction is stored and is used for executing the method for eliminating interference in any of claims 1 to 6.

Figure 1

202

201

Performing soft information reconstruction on received control information according to the coding soft information or bit sequence information of decoding information, to obtain reconstructed soft modulation information of the control information

Performing soft information reconstruction on received data information according to coding soft information of data information, to obtain reconstructed soft modulation information of the data information

203

Performing pre-coding on the reconstructed soft modulation information of the data information and the reconstructed soft modulation information of the control information, and performing interference elimination by using pre-coded reconstructed information

Figure 2-1

Respectively acquiring bit sequence information of decoding information of decoded HARQ-ACK information and RI information

221

Performing repeated mapping coding, interweaving and modulation on the bit sequence information of the decoding information in a process as same as that in a transmitting end, to obtain reconstructed soft modulation information of the HARQ-ACK information and the RI information

222

Figure 2-2

Respectively acquiring bit sequence information of decoding information of decoded CQI/PMI information

223

Performing repeated mapping coding, interweaving and modulation on the bit sequence information of the decoding information in a process as same as that in the transmitting end, to obtain reconstructed soft modulation information of the PMI/PMI information

224

Figure 2-3

Aacquiring soft decision information obtained after demodulation

225

Inputting the soft decision information into an MAP convolutional decoder to obtain coding soft information with a code rate of 1/3 after decoding processing; and performing soft information modulation on the coding soft information with a code rate of 1/3 to obtain reconstructed soft modulation information of the long CQI/PMI information

226

Figure 2-4

| Second reconstruction unit 32 | | First reconstruction unit 31 |

Processing unit 33

Figure 3

# INTERNATIONAL SEARCH REPORT

| International application No. |
| --- |
| PCT/CN2014/077907 |

**A. CLASSIFICATION OF SUBJECT MATTER**

H04B 7/08 (2006.01) i; H04B 7/06 (2006.01) i

According to International Patent Classification (IPC) or to both national classification and IPC

**B. FIELDS SEARCHED**

Minimum documentation searched (classification system followed by classification symbols)

H04B; H04L; H04W

Documentation searched other than minimum documentation to the extent that such documents are included in the fields searched

Electronic data base consulted during the international search (name of data base and, where practicable, search terms used)

CNABS; CNTXT; CNKI; VEN: interference, cancellat+, canceler, canceller, reconstruct+, control+ information

**C. DOCUMENTS CONSIDERED TO BE RELEVANT**

| Category* | Citation of document, with indication, where appropriate, of the relevant passages | Relevant to claim No. |
| --- | --- | --- |
| A | CN 102437979 A (ZTE CORPORTION) 02 May 2012 (02.05.2012) the abstract, description paragraphs [0020]-[0027], [0059]-[0066] and figures 2 and 5 | 1-11 |
| A | CN 101411154 A (LUCENT TECHNOLOGIES INC.) 15 April 2009 (15.04.2009) the whole document | 1-11 |
| A | CN 102396159 A (ZTE CORPORTION) 28 March 2012 (28.03.2012) the whole document | 1-11 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 October 2014 | 19 October 2014 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer CAI, Guoli Telephone No. (86-10) 62087675 |
| --- | --- |

Form PCT/ISA /210 (second sheet) (July 2009)

**INTERNATIONAL SEARCH REPORT**
Information on patent family members

| | International application No. |
|---|---|
| | PCT/CN2014/077907 |

| Patent Documents referred in the Report | Publication Date | Patent Family | Publication Date |
|---|---|---|---|
| CN 102437979 A | 02 May 2012 | WO 2012159526 A1 | 29 November 2012 |
| CN 101411154 A | 15 April 2009 | JP 4960438 B2 | 27 June 2012 |
| | | KR 1335968B B1 | 04 December 2013 |
| | | WO 2007111825 A3 | 01 November 2007 |
| | | WO 2007111825 A2 | 04 October 2007 |
| | | CN 101411154 B | 18 April 2012 |
| | | US 7688708 B2 | 30 March 2010 |
| | | US 2007223359 A1 | 27 September 2007 |
| | | JP 2009530974 A | 27 August 2009 |
| | | KR 20090003244 A | 09 January 2009 |
| | | EP 1999924 A2 | 10 December 2008 |
| | | IN 200804935 P4 | 13 March 2009 |
| CN102396159A | 28 March 2012 | CN 102396159 B | 25 September 2013 |
| | | EP 2445115 A1 | 25 April 2012 |
| | | WO 2011079470 A1 | 07 July 2011 |
| | | HK 1163951 A0 | 14 September 2012 |
| | | HK 1163951 A1 | 28 February 2014 |

Form PCT/ISA /210 (patent family annex) (July 2009)